# EUROPÄISCHE PATENTSCHRIFT

(11) **EP 0 617 064 B1**
(45) Veröffentlichungstag und Bekanntmachung des Hinweises auf die Patenterteilung: **08.09.1999**
(21) Anmeldenummer: 94103544.6
(22) Anmeldetag: 09.03.1994
(51) Int. Cl.: C08F 255/02, C08F 8/46

(54) **Gepfropfte Propylencopolymerisate**
Grafted propylene copolymers
Copolymères de propylène greffés

(30) Priorität: 18.03.1993 DE 4308591
(43) Veröffentlichungstag der Anmeldung: 28.09.1994
(73) Patentinhaber: BASF Aktiengesellschaft, 67063 Ludwigshafen (DE)
(72) Erfinder: Marczinke, Bernd Lothar, Dr., D-67346 Speyer (DE); Mueller, Patrik, Dr., D-67661 Kaiserslautern (DE); Kerth, Juergen, Dr., D-67316 Carlsberg (DE)

(56) Entgegenhaltungen:
- EP-A- 0 268 294
- EP-A- 0 467 178
- CHEMICAL ABSTRACTS, Bd. 99, Columbus, Ohio, US; Zusammenfassung Nr. 177135T, & JP-A-58 052 340

## Beschreibung

Die vorliegende Erfindung betrifft mit α,β-ethylenisch ungesättigten Carbonsäuren bzw. Carbonsäurederivaten gepfropfte Propylencopolymerisate, bestehend aus
einem statistisch verteilten Propylencopolymerisat (I) mit 0,1 bis weniger als 15 Gew.-% einpolymerisierter C₂- bis C₁₀-/Alk-1-ene und
einem statistisch verteilten Propylencopolymerisat (II) mit 15 bis 80 Gew.-% einpolymerisierter C₂- bis C₁₀-Alk-1-ene
erhältlich durch Umsetzung des zu pfropfenden Monomeren mit dem Propylencopolymerisat bei Drücken von 1 bis 300 bar, wobei man in Abwesenheit eines radikalisch zerfallenden Initiators 0,01 bis 1,0 Gew.-%, bezogen auf das Propylencopolymerisat, des zu pfropfenden Monomeren, dem aufgeschmolzenen Propylencopolymerisat hinzumischt und die Pfropfreaktion bei 200 bis 350°C durchführt.

Weiterhin betrifft die vorliegende Erfindung ein Verfahren zur Herstellung dieser gepfropften Propylencopolymerisate sowie ein Verfahren zur Herstellung von vernetzten oder vernetzbaren Propylencopolymerisaten, ferner die Verwendung der gepfropften Propylencopolymerisate als Haftvermittler oder in Folien, Fasern oder Formkörper.

Pfropfcopolymere können dadurch hergestellt werden, daß man das zu pfropfende Polymerisat zunächst mit Peroxiden umsetzt und anschließend mit geeigneten Monomeren in Kontakt bringt (US-A 3 862 265, US-A 3 953 655, US 4 001 172). Durch die Behandlung mit den als Initiatoren wirkenden Peroxiden bilden sich zunächst Radikale an der Polymerkette, an die sich in der darauf folgenden Pfropfreaktion Monomere anlagern können.

Weiterhin sind Verfahren bekannt, in welchen Homo- oder Copolymerisate des Ethylens zunächst durch eine von organischen Peroxiden initiierte Reaktion mit ungesättigten Carbonsäuren und/oder deren Estern bzw. Anhydriden gepfropft und anschließend mit multifunktionellen Aminen oder Alkoholen umgesetzt werden (DE-A 2 627 785, EP-A 50 994, US-A 4 089 794, US-A 4 137 185, US-A 4 161 452, US-A 4 382 128). Dabei entstehen in der Regel vernetzte Produkte, die zwar sehr stabil sind, sich aber aufgrund ihres geringen Schmelzflusses thermisch nicht mehr mit den in der Kunststofftechnik üblichen Methoden verarbeiten lassen.

Des weiteren sind Verfahren zur Herstellung von gepfropften oder vernetzten Polypropylenen beschrieben, die aber teilweise erhebliche Mängel aufweisen. So führt beispielsweise der Einsatz von Peroxiden bei Pfropfungs- oder Vernetzungsreaktionen in der Regel zu einem Molmassenabbau, der die mechanischen Eigenschaften des dabei erhältlichen Produktes deutlich verschlechtert [J. Appl. Poly. Sci., Vol. 32, 5431-5437 (1986)]. Eine andere Möglichkeit der Vernetzung von Polypropylenen besteht darin, diese mit Vinylsilanen zunächst zu pfropfen und anschließend unter Verwendung eines organischen Zinnkatalysators durch Kondensation mit Wasserdampf zu vernetzen (DE-A 3 520 106, US-A 3 328 339). Dieses Verfahren ist aber sehr aufwendig, da die meist toxischen Zinnkatalysatoren nur schwierig aus dem Produkt entfernt werden können. Außerdem werden dabei sämtliche, für die Haftung der Polymerschmelze auf polaren Substraten erforderlichen Silangruppen beim Abkühlen durch Wasser hydrolysiert, was zur Folge hat, daß Mehrschichtenverbunde praktisch nicht mehr hergestellt werden können. Aus der FR 2 572 417 ist ferner ein Verfahren bekannt, bei welchem Polypropylen durch Reaktion mit organischen Peroxiden und ungesättigten Carbonsäureanhydriden gepfropft werden kann.

Die Verwendung von Peroxiden bei Pfropfreaktionen ist jedoch häufig mit einer Reihe von Nachteilen verbunden. Verwendet man beispielsweise das zu pfropfende Monomer in relativ kleinen Konzentrationen, so sind zur Erreichung eines praktisch vollständigen Umsatzes relativ hohe Peroxidkonzentrationen nötig. Der Einsatz von hohen Peroxidkonzentrationen bei der Pfropfung von Polypropylenen führt aber in der Regel zu einem starken Molmassenabbau und zu einer Verringerung der Haftfähigkeit gegenüber polaren Substanzen, zum Beispiel Metallen oder Polyamiden, so daß das entstehende Polymerisat keine befriedigenden anwendungstechnischen Eigenschaften aufweist.

Aus der DE-A 4 022 570 ist bekannt, gepfropfte Propylencopolymerisate in Abwesenheit radikalisch zerfallender Initiatoren herzustellen. Nach diesem leicht durchführbaren Verfahren werden Pfropfcopolymerisate mit guten mechanischen Eigenschaften erhalten, die gegebenenfalls noch mit Vernetzungsmitteln zu vernetzten oder vernetzbaren Materialien umgesetzt werden können.

Nachteilig an dem in der DE-A 40 22 570 beschriebenen Verfahren ist jedoch, daß die daraus erhaltenen Propylencopolymerisate häufig keine sehr hohen Pfropfausbeuten aufweisen, was für einige Anwendungsbereiche wichtig ist. Unter Pfropfausbeute versteht man dabei den prozentualen Anteil der gepfropften Monomeren, bezogen auf die Gesamtmenge des eingesetzten, zu pfropfenden Monomeren. Aus den nicht sehr hohen Pfropfausbeuten resultieren Haftfestigkeiten gegenüber Materialien wie beispielsweise Glas, Polyamid oder Metallen, die für einige Anwendungsbereiche noch verbesserungsfähig sind.

Der vorliegenden Erfindung lag daher die Aufgabe zugrunde, den geschilderten Nachteilen abzuhelfen und gepfropfte Propylencopolymerisate ohne Mitverwendung von Peroxiden zu entwickeln, die sich durch eine erhöhte Pfropfausbeute und eine verbesserte Haftfestigkeit auszeichnen.

Demgemäß wurden die eingangs definierten, mit ethylenisch ungesättigten Carbonsäuren- bzw. Carbonsäurederivaten gepfropften Propylencopolymerisate gefunden.

Bei dem, zu den erfindungsgemäßen Propylencopolymerisaten führenden Verfahren werden als Pfropfmonomere α,β-ungesättigte Carbonsäuren bzw. Carbonsäurederivate verwendet. Unter α,β-ungesättigten Carbonsäuren bzw. Carbonsäurederivaten sollen dabei die üblichen mit Propylen copolymerisierbaren Carbonsäuren, sowie deren Ester-, Anhydrid- oder Amidderivate verstanden werden. Bevorzugt werden u.a. Maleinsäure, Fumarsäure, Itaconsäure, Acrylsäure, Crotonsäure oder deren Anhydride eingesetzt, wobei Maleinsäureanhydrid besonders geeignet ist.

Das zu pfropfende Monomere wird bei dem zu den erfindungsgemäßen Propylencopolymerisaten führenden Verfahren mit einem solchen Propylencopolymerisat umgesetzt, welches aus einem statistisch verteilten Propylencopolymerisat (I) mit 0,1 bis weniger als 15 Gew.-% einpolymerisierter C₂- bis C₁₀-Alk-1-ene und einem statistisch verteilten Propylencopolymerisat (II) mit 15 bis 80 Gew.-% einpolymerisierter C₂- bis C₁₀-Alk-1-ene besteht. Bevorzugt wird dabei ein solches Propylencopolymerisat verwendet, welches ein statistisch verteiltes Propylencopolymerisat (I) mit 0,2 bis 12 Gew.-%, insbesondere mit 0,3 bis 9 Gew.-% einpolymerisierter C₂- bis C₁₀-Alk-1-ene, sowie ein statistisch verteiltes Propylencopolymerisat (II) mit 20 bis 75 Gew.-%, insbesondere mit 25 bis 70 Gew.-% einpolymerisierter C₂- bis C₁₀-Alk-1-ene aufweist. Als C₂- bis C₁₀-Alk-1-ene werden dabei insbesondere Ethylen, But-1-en, Pent-1-en, Hex-1-en, Hept-1-en oder Oct-1-en verwendet, wobei bei der Herstellung dieser Copolymerisate die C₂- bis C₁₀-Alk-1-ene sowohl einzeln als auch als Gemische zusammen mit dem Propylen copolymerisiert werden können.

Vorzugsweise wird ein solches Propylencopolymerisat verwendet, welches aus 25 bis 97 Gew.-% des statistisch verteilten Propylencopolymerisats (I) und aus 3 bis 75 Gew.-% des statistisch verteilten Propylencopolymerisats (II) besteht. Besonders bevorzugte Propylencopolymerisate weisen dabei mengenmäßige Anteile am statistisch verteilten Propylencopolymerisate (I) von 35 bis 95 Gew.-% und insbesondere von 40 bis 93 Gew.-% und am statistisch verteilten Propylencopolymerisat (II) von 5 bis 65 Gew.-% und insbesondere von 7 bis 60 Gew.-% auf.

Die Herstellung dieses Propylencopolymerisats erfolgt üblicherweise durch Polymerisation mit Hilfe von Ziegler-Natta-Katalysatoren. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt. Die Polymerisation erfolgt dabei in den, in der Technik üblicherweise für Polymerisationsreaktionen verwendeten Reaktoren, vorzugsweise in der Gasphase.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 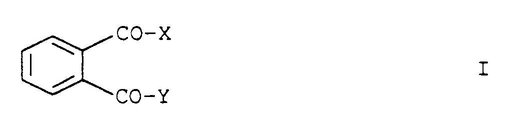 verwendet, wobei X und Y jeweils für ein Chloratom oder einen C₁-bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆-bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Die dadurch erhältliche titanhaltige Feststoffkomponente wird mit Cokatalysatoren als Ziegler-Natta-Katalysatorsystem verwendet. Als Cokatalysatoren kommen dabei Aluminiumverbindungen und weitere Elektronendonorverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie Phosphor- und siliciumorganische Verbindungen. Bevorzugte Elektronendonorverbindungen sind dabei siliciumorganische Verbindungen der allgemeinen Formel II

R¹ₙSi(OR²)₄₋ₙ II,

wobei
R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Diethoxyisobutylisopropylsilan und Dimethoxyisopropyl-sek.-butylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Mit Hilfe derartiger Katalysatorsysteme lassen sich die zur Darstellung der erfindungsgemäßen, gepfropften Polymerisate benötigten Propylencopolymerisate herstellen. Vorzugsweise sind diese u.a. dadurch erhältlich, daß zunächst in einer ersten Polymerisationsstufe das statistisch verteilte Propylencopolymerisat (I) hergestellt wird und anschließend diesem das statistisch verteilte Propylencopolymerisat (II) hinzugefügt wird. Dies kann zum Beispiel in einer zweistufigen Reaktorkaskade erfolgen. Die Reihenfolge der Herstellung der einzelnen Propylencopolymerisate (I) und (II) kann auch umgekehrt werden.

Dabei wird die Polymerisation in der ersten Polymerisationsstufe vorzugsweise bei einem Druck von 20 bis 40 bar, insbesondere von 25 bis 35 bar, einer Temperatur von 60 bis 90°C, insbesondere von 65 bis 85°C und einer mittleren Verweilzeit des Reaktionsgemisches von 0,5 bis 5 Stunden, insbesondere von 1,0 bis 4 Stunden durchgeführt. Üblicherweise wählt man die Reaktionsbedingungen so, daß in der ersten Polymerisationsstufe pro mmol der Aluminiumkomponente 0,05 bis 2 kg, bevorzugt 0,1 bis 1,5 kg des Propylencopolymerisats (I) gebildet wird. Dabei empfiehlt es sich, das Partialdruckverhältnis zwischen Propylen und dem C₂- bis C₁₀-Alk-1-en auf etwa 5:1 bis 500:1, insbesondere auf 10:1 bis 200:1, einzustellen. Die Polymerisation kann in Anwesenheit von Reglern, beispielsweise von Wasserstoff durchgeführt werden.

Das auf diese Weise erhältliche Propylencopolymerisat (I) wird nach Beendigung der Reaktion zusammen mit dem Katalysator aus der ersten Polymerisationsstufe ausgetragen und in die zweite Polymerisationsstufe eingeführt, wo durch Hinzupolymerisieren eines Gemisches aus Propylen und weiteren C₂- bis C₁₀-Alk-1-enen das Propylencopolymerisat (II) gebildet wird.

In der zweiten Polymerisationsstufe erfolgt die Polymerisation vorzugsweise bei einem Druck von 5 bis 30 bar, insbesondere von 10 bis 25 bar, einer Temperatur von 30 bis 80°C, insbesondere von 40 bis 70°C und einer mittleren Verweilzeit von 0,5 bis 5 Stunden, insbesondere von 1,0 bis 4 Stunden. Das Partialdruckverhältnis zwischen Propylen und dem C₂- bis C₁₀-Alk-1-en liegt in diesem Fall bei etwa 0,1:1 bis 20:1, insbesondere bei 0,15:1 bis 15:1. Das Gewichtsverhältnis zwischen den in der ersten und den in der zweiten Polymerisationsstufe umgesetzten Monomeren beträgt etwa 33:1 bis 1:3, insbesondere 19:1 bis 1:2.

Weiterhin kann es sich empfehlen, dem Reaktionsgemisch der zweiten Polymerisationsstufe ein C₁- bis C₈-Alkanol, insbesondere ein C₁-C₄-Alkanol, hinzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des C₁-C₈-Alkanols wird dabei zweckmäßigerweise so bemessen, daß das Molverhältnis zwischen dem C₁-C₈-Alkanol und der als Cokatalysator dienenden Aluminiumverbindung 0,01:1 bis 10:1, insbesondere 0,02:1 bis 5:1 beträgt.

Das Molekulargewicht der dabei erhältlichen Propylencopolymerisate (II) kann wie üblich durch Zugabe von Reglern, insbesondere von Wasserstoff kontrolliert werden. Weiterhin ist es möglich, Inertgase wie Stickstoff oder Argon mitzuverwenden.

Auf diese Weise erhält man das erfindungsgemäß einzusetzende Propylencopolymerisat, bestehend aus dem statistisch verteilten Propylencopolymerisat (I) und dem statistisch verteilten Propylencopolymerisat (II).

Die erfindungsgemäßen, gepfropften Propylencopolymerisate werden nach einem Verfahren hergestellt, bei welchem man bei Drücken von 1 bis 300 bar, vorzugsweise bei Drücken von 1 bis 250 bar, in Abwesenheit eines radikalisch zerfallenden Initiators 0,01 bis 1,0 Gew.-%, bezogen auf das Propylencopolymerisat, des zu pfropfenden Monomeren, dem aufgeschmolzenen Propylencopolymerisat hinzumischt und die Pfropfreaktion bei Temperaturen von 200 bis 350°C durchgeführt. Vorzugsweise wird das zu pfropfende Monomere dabei in Konzentrationen von 0,01 bis 0,8, insbesondere von 0,01 bis 0,5 Gew.-%, jeweils bezogen auf das Propylencopolymerisat, eingesetzt. Die Pfropfreaktion läßt sich vorteilhaft bei Temperaturen von 210 bis 290°C, insbesondere bei Temperaturen von 210 bis 280°C und Verweilzeiten von 0,5 bis 10, insbesondere von 0,5 bis 5 Minuten, durchführen.

Bei der peroxidfreien Pfropfung der Propylencopolymerisate können die in der Kunststofftechnik üblichen Reaktoren, beispielsweise Extruder oder Brabender-Mischer eingesetzt werden. Besonders gut eignen sich dabei insbesondere Zweischneckenextruder. In einer bevorzugten Ausführungsform dosiert man das Propylencopolymerisat zusammen mit dem zu pfropfenden Monomeren in Abwesenheit eines organischen Peroxids in den Einzug des Zweischneckenextruders, wo das Gemisch zunächst bei Temperaturen von etwa 120 bis 180°C aufgeschmolzen und anschließend bei 200 bis 350°C 0,5 bis 5 Minuten lang gepfropft wird. Bevorzugt wird dabei das zu pfropfende Monomere im flüssigen Zustand hinzugefügt, wobei dieses vorher erwärmt wird. Das zu pfropfende Monomere kann auch nach dem Aufschmelzen des Propylencopolymerisats in den Extruder gegeben werden. Zweckmäßig werden nach Beendigung der Pfropfreaktion in zwei, dem Einzugsbereich des Extruders sich anschließenden Entgasungszonen Spuren der nicht umgesetzten zu pfropfenden Monomere entfernt.

Die auf diese Weise erhältlichen gepfropften Propylencopolymerisate enthalten üblicherweise 0,01 bis 1 Gew.-% des zu pfropfenden Monomeren. Sie weisen gute anwendungstechnische Eigenschaften, insbesondere eine hohe Haftfestigkeit gegenüber polaren Substanzen, beispielsweise gegenüber Metallen oder Polyamiden auf. Darüber hinaus zeichnen sie sich durch eine verbesserte Pfropfausbeute aus. Ihre Fließfähigkeit hat sich im Vergleich zu dem nicht gepfropften Propylencopolymerisat kaum verändert, da bei der Pfropfreaktion aufgrund des peroxidfreien Verfahrens praktisch kein Molmassenabbau stattfindet. Sie sind farb- und geruchlos und weisen nur geringe Restmonomergehalte auf. Ihre Schmelzflußindices liegen im Bereich von 0,1 bis 100 g/10 min., vorzugsweise im Bereich von 10 bis 50 g/10 min., jeweils gemessen nach DIN 53 735 bei 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird.

Die erfindungsgemäßen gepfropften Propylencopolymerisate eignen sich u.a. als Haftvermittler oder in Folien, Fasern oder Formkörper. Sie können auch mit organischen Vernetzungsmitteln, wie beispielsweise Diaminen zu vernetzten oder vernetzbaren Propylencopolymerisaten umgesetzt werden.

### Beispiele

Die Beispiele 1 und 2 sowie die Vergleichsbeispiele A und B wurden in einem Zweischneckenextruder der Fa. Werner & Pfleiderer ZSK 40 durchgeführt. Die dabei verwendeten Propylencopolymerisate wurden als Grieß oder als Granulat dem Zweischneckenextruder zugeführt und dort bei 180°C aufgeschmolzen. Der Polymerdurchsatz im Extruder betrug 20 kg/h, die mittlere Verweilzeit 2 Minuten.

### Beispiel 1

100 Gew.-Teile eines Propylen-Ethylencopolymerisats, bestehend aus 55,2 Gew.-% eines statistischen Ethylen-Propylencopolymerisats [bestimmt durch Extraktionsfraktionierung nach W. Holtrup, Makromol. Chem. 178, 2335 (1977)] mit 2,5 Gew.-% einpolymerisiertem Ethylen [bestimmt durch Fouriertransformationsspektroskopie] und 44,8 Gew.-% eines Propylen-Ethylencopolymerisats mit einem Ethylengehalt von 50 Gew.-% und einen Schmelzflußindex von 1,0 g/10 min [bei 230°C und 2,16 kg, nach DIN 53 735] wurden im Zweischneckenextruder ZSK 40 bei 180°C aufgeschmolzen, mit 0,25 Gew.-Teilen flüssigem Maleinsäureanhydrid versetzt und bei 260°C zur Reaktion gebracht. Der Druck betrug dabei 10 bar. Nach Beendigung der Reaktion wurde nicht umgesetztes Maleinsäureanhydrid über eine Entgasung aus der Polymerschmelze entfernt, das Produkt anschließend in einem Wasserbad gekühlt, danach granuliert und getrocknet. Der Gehalt an gepfropftem Maleinsäureanhydrid, die Pfropfausbeute (Gehalt an gepfropftem Maleinsäureanhydrid, bezogen auf die Gesamtmenge des eingesetzten Maleinsäureanhydrids) der Schmelzflußindex sowie die Haftung auf Polyamid der Beispiele sowie der Vergleichsbeispiele können der nachfolgenden Tabelle entnommen werden.

### Vergleichsbeispiel A

Unter den Bedingungen von Beispiel 1 wurden 100 Gew.-Teile eines Propylen-Ethylencopolymerisats bestehend aus 50,8 Gew.-% eines Propylenhomopolymerisats [bestimmt durch Extraktionsfraktionierung nach W. Holtrup, Makromol. Chem. 178, 2335 (1977)] und 49,2 Gew.-% eines Propylen-Ethylencopolymerisats mit einem Ethylengehalt von 60 Gew.-% [bestimmt durch Fouriertransformationsspektroskopie] und einem Schmelzflußindex von 1,2 g/10 min mit 0,25 Gew.-Teilen Maleinsäureanhydrid gepfropft.

### Beispiel 2

Unter den Bedingungen von Beispiel 1 wurden in 100 Gew.-Teile eines Propylen-Ethylencopolymerisats bestehend aus 55,5 Gew.-% eines statistischen Ethylen-Propylencopolymerisats [bestimmt durch Extraktionsfraktionierung nach W. Holtrup, Makromol. Chem. 178, 2335 (1977)] mit 2,5 Gew.-% einpolymerisiertem Ethylen [bestimmt durch Fouriertransformationsspektroskopie] und 44,5 Gew.-% eines Propylen-Ethylencopolymerisats mit einem Ethylengehalt von 28 Gew.-% und einen Schmelzflußindex von 1,5 g/10 min [bei 230°C und 2,16 kg, nach DIN 53 735]% im Zweischneckenextruder ZSK 40 bei 180°C aufgeschmolzen, mit 0,25 Gew.-Teilen flüssigem Maleinsäureanhydrid versetzt und bei 260°C zur Reaktion gebracht.

### Vergleichsbeispiel B

Unter den Bedingungen von Beispiel 1 wurden 100 Gew.-Teile eines Propylen-Ethylencopolymerisats bestehend aus 54,2 Gew.-% eines Propylenhomopolymerisats [bestimmt durch Extraktionsfraktionierung nach W. Holtrup, Makromol. Chem. 178, 2335 (1977)] und 45,8 Gew.-% eines Propylen-Ethylencopolymerisats mit einem Ethylengehalt von 28 Gew.-% und einen Schmelzflußindex von 1,3 g/10 min [bei 230°C und 2,16 kg, nach DIN 53 735] mit 0,25 Gew.-Teilen Maleinsäureanhydrid gepfropft.

**Tabelle**

| | Beispiele | | Vergleichsbeispiele | |
|---|---|---|---|---|
| | 1 | 2 | A | B |
| Gehalt an gepfropftem Maleinsäureanhydrid [Gew.-Teile pro 100 Gew.-Teile Propylencopolymerisat] | 0,19 | 0,18 | 0,16 | 0,14 |
| Pfropfausbeute [%] | 76 | 72 | 64 | 56 |
| Schmelzflußindex* [230°C/2,1 kg] | 4,5 | 4,4 | 4,9 | 4,8 |
| Haftung auf Polyamid** [N/15 mm] | 18 | 17 | 14 | 13 |

| | | | | |
|---|---|---|---|---|
| * nach DIN 53 735 | | | | |
| ** nach EP-A 157 107, Seite 4-5 | | | | |

Aus der Tabelle ist ersichtlich, daß sich die erfindungsgemäßen gepfropften Propylencopolymerisate insbesondere durch eine erhöhte Pfropfausbeute und eine verbesserte Haftfestigkeit auszeichnen.

## Patentansprüche

1. Mit α,β-ethylenisch ungesättigten Carbonsäuren bzw. Carbonsäurederivaten gepfropfte Propylencopolymerisate, bestehend aus
einem statistisch verteilten Propylencopolymerisat (I) mit 0,1 bis weniger als 15 Gew.-% einpolymerisierter C₂-bis C₁₀-Alk-1-ene und
einem statistisch verteilten Propylencopolymerisat (II) mit 15 bis 80 Gew.-% einpolymerisierter C₂- bis C₁₀-Alk-1-ene
erhältlich durch Umsetzung des zu pfropfenden Monomeren mit dem Propylencopolymerisat bei Drücken von 1 bis 300 bar, wobei man in Abwesenheit eines radikalisch zerfallenden Initiators 0,01 bis 1,0 Gew.-%, bezogen auf das Propylencopolymerisat, des zu pfropfenden Monomeren, dem aufgeschmolzenen Propylencopolymerisat hinzumischt und die Pfropfreaktion bei 200 bis 350°C durchführt.

2. Gepfropfte Propylencopolymerisate nach Anspruch 1, wobei man ein solches Propylencopolymerisat verwendet, welches aus
25 bis 97 Gew.-% des statistisch verteilten Propylencopolymerisats (I) und 3 bis 75 Gew.-% des statistisch verteilten Propylencopolymerisats (II) besteht.

3. Gepfropfte Propylencopolymerisate nach den Ansprüchen 1 oder 2, wobei man ein solches Propylencopolymerisat verwendet, welches aus
35 bis 95 Gew.-% eines statistisch verteilten Propylencopolymerisats (I) mit 0,2 bis 12 Gew.-% einpolymerisierter C₂- bis C₁₀-Alk-1-ene und aus 5 bis 65 Gew.-% eines statistisch verteilten Propylencopolymerisats (II) mit 20 bis 75 Gew.-% einpolymerisierter C₂- bis C₁₀-Alk-1-ene besteht.

4. Gepfropfte Propylencopolymerisate nach den Ansprüchen 1 bis 3, erhältlich durch Pfropfung des Propylencopolymerisates mit Maleinsäureanhydrid.

5. Verfahren zur Herstellung von gepfropften Propylencopolymerisaten gemäß den Ansprüchen 1 bis 4 durch Umsetzung des zu pfropfenden Monomeren mit dem Propylencopolymerisat bei Drücken von 1 bis 300 bar und Temperaturen von 200 bis 350°C, wobei man in Abwesenheit eines radikalisch zerfallenden Initiators 0,01 bis 1,0 Gew.-%, bezogen auf das Propylencopolymerisat, des zu pfropfenden Monomeren, dem aufgeschmolzenen Propylencopolymerisat hinzumischt, dadurch gekennzeichnet, daß man ein solches Propylencopolymerisat verwendet, welches aus einem statistisch verteilten Propylencopolymerisat (I) mit 0,1 bis weniger als 15 Gew.-% einpolymerisierter C₂- bis C₁₀-Alk-1-ene und einem statistisch verteilten Propylencopolymerisat (II) mit 15 bis 80 Gew.-% einpolymerisierter C₂- bis C₁₀-Alk-1-ene besteht.

6. Verfahren nach Anspruch 5, dadurch gekennzeichnet, daß die Pfropfreaktion bei Temperaturen von 210 bis 290°C durchgeführt wird.

7. Verfahren nach den Ansprüchen 5 oder 6, dadurch gekennzeichnet, daß das zu pfropfende Monomere in Konzentrationen von 0,01 bis 0,8 Gew.-%, bezogen auf das Propylencopolymerisat, verwendet wird.

8. Verfahren zur Herstellung von vernetzten oder vernetzbaren Propylencopolymerisaten, wobei man die gepfropften Propylencopolymerisate gemäß den Ansprüchen 1 bis 4 mit organischen Vernetzungsmitteln umsetzt.

9. Verwendung der gepfropften Propylencopolymerisate gemäß den Ansprüchen 1 bis 4 als Haftvermittler oder in Folien, Fasern oder Formkörper.

## Claims

1. A propylene copolymer grafted with α,β-ethylenically unsaturated carboxylic acid or carboxylic acid derivatives and consisting of
a random propylene copolymer (I) with from 0.1 to less than 15% by weight of polymerised C₂-C₁₀-alk-1-enes and
a random propylene copolymer (II) with from 15 to 80% by weight of polymerized C₂-C₁₀-alk-1-enes,
obtainable by reacting the graft monomer with the propylene copolymer at from 1 to 300 bar, from 0.01 to 1.0% by weight, based on the propylene copolymer, of the graft monomer being mixed with the molten propylene copolymer in the absence of a free radical initiator, and the grafting reaction being carried out at from 200 to 350°C.

2. A propylene graft copolymer as claimed in claim 1, wherein the propylene copolymer used is one which consists of from 25 to 97% by weight of the random propylene copolymer (I) and from 3 to 75% by weight of the random propylene copolymer (II).

3. A propylene graft copolymer as claimed in claim 1 or 2, wherein the propylene copolymer used is one which consists of from 35 to 95% by weight of a random propylene copolymer (I) with from 0.2 to 12% by weight of polymerized C₂-C₁₀-alk-1-enes and of from 5 to 65% by weight of a random propylene copolymer (II) with from 20 to 75% by weight of polymerized C₂-C₁₀-alk-1-enes.

4. A propylene graft copolymer as claimed in any of claims 1 to 3, obtainable by grafting the propylene copolymer with maleic anhydride.

5. A process for the preparation of a propylene graft copolymer as claimed in any of claims 1 to 4 by reacting the graft monomer with the propylene copolymer at from 1 to 300 bar and from 200 to 350°C, from 0.01 to 1.0% by weight, based on the propylene copolymer, of the graft monomer being mixed with the molten propylene copolymer in the absence of a free radical initiator, wherein the propylene copolymer used is one which consists of a random propylene copolymer (I) with from 0.1 to less than 15% by weight of polymerised C₂-C₁₀-alk-1-enes and a random propylene copolymer (II) with from 15 to 80% by weight of polymerised C₂-C₁₀-alk-1-enes.

6. A process as claimed in claim 5, wherein the grafting reaction is carried out at from 210 to 290°C.

7. A process as claimed in claim 5 or 6, wherein the graft monomer is used in concentrations of from 0.01 to 0.8% by weight, based on the propylene copolymer.

8. A process for the preparation of crosslinked or crosslinkable propylene copolymers, wherein the propylene graft copolymers as claimed in any of claims 1 to 4 are reacted with organic crosslinking agents.

9. Use of a propylene graft copolymer as claimed in any of claims 1 to 4 as adhesion promoters or in films, fibers or moldings.

## Revendications

1. Copolymères de propylène greffés avec des acides carboxyliques ou dérivés d'acides carboxyliques α,β-éthyléniquement insaturés, constitués
d'un copolymère de propylène statistiquement distribué (I) comprenant 0,1 à moins de 15% en poids d'alc-1-ènes en C₂-C₁₀ polymérisés, et
d'un copolymère de propylène statistiquement distribué (II) comprenant 15 à 80% en poids d'alc-1-ènes en C₂-C₁₀ polymérisés,
que l'on peut obtenir par réaction du monomère à greffer avec le copolymère de propylène à des pressions de 1 à 300 bars, dans laquelle on mélange 0,01 à 1,0% en poids, par rapport au copolymère de propylène, du monomère à greffer au copolymère de propylène fondu, en l'absence d'un initiateur de type radicalaire, et on effectue la réaction de greffage à 200 jusqu'à 350°C.

2. Copolymères de propylène greffés suivant la revendication 1, dans lesquels on utilise un copolymère de propylène qui est constitué de 25 à 97% en poids du copolymère de propylène statistiquement distribué (I) et de 3 à 75% en poids du copolymère de propylène statistiquement distribué (II).

3. Copolymères de propylène greffés suivant l'une des revendications 1 et 2, dans lesquels on utilise un copolymère de propylène qui est constitué de 35 à 95% en poids d'un copolymère de propylène statistiquement distribué (I) comportant 0,2 à 12% en poids d'alc-1-ènes en C₂-C₁₀ polymérisés et de 5 à 65% en poids d'un copolymère de propylène statistiquement distribué (II) comportant 20 à 75% en poids d'alc-1-ènes en C₂-C₁₀ polymérisés.

4. Copolymères de propylène greffés suivant l'une des revendications 1 à 3, que l'on peut obtenir par greffage du copolymère de propylène avec de l'anhydride maléique.

5. Procédé de préparation de copolymères de propylène greffés suivant l'une des revendications 1 à 4, par réaction du monomère à greffer avec le copolymère de propylène à des pressions de 1 à 300 bars et des températures de 200 à 350°C, procédé dans lequel on mélange 0,01 à 1,0% en poids, par rapport au copolymère de propylène, du monomère à greffer au copolymère de propylène fondu en l'absence d'un initiateur de type radicalaire, caractérisé en ce qu'on utilise un copolymère de propylène qui est constitué d'un copolymère de propylène statistiquement distribué (I) comportant 0,1 à moins de 15% en poids d'alc-1-ènes en C₂-C₁₀ polymérisés et d'un copolymère de propylène statistiquement distribué (II) comportant 15 à 80% en poids d'alc-1-ènes en C₂-C₁₀ polymérisés.

6. Procédé suivant la revendication 5, caractérisé en ce que la réaction de greffage est effectuée à des températures de 210 à 290°C.

7. Procédé suivant l'une des revendications 5 et 6, caractérisé en ce que le monomère à greffer est utilisé en des concentrations de 0,01 à 0,8% en poids, par rapport au copolymère de propylène.

8. Procédé de préparation de copolymères de propylène réticulés ou réticulables, dans lequel on fait réagir les copolymères de propylène greffés suivant l'une des revendications 1 à 4, avec des agents de réticulation organiques.

9. Utilisation des copolymères de propylène greffés suivant l'une des revendications 1 à 4, comme agents adhérisants ou dans des feuilles, fibres ou corps façonnés.
